# EUROPEAN PATENT APPLICATION

(11) **EP 4 611 282 A1**
(43) Date of publication of application: **03.09.2025**
(21) Application number: 25159567.4
(22) Date of filing: 24.02.2025
(51) Int. Cl.: H04B 10/275, H04B 10/2587, H04J 14/02

(54) **IN-VEHICLE COMMUNICATION SYSTEM AND VEHICLE**

(30) Priority: 29.02.2024 CN 202410236042
(71) Applicant: BYD Company Limited, Shenzhen, Guangdong 518118 (CN)
(72) Inventor: ZHONG, Yilin, Shenzhen, 518118 (CN); PENG, Banghuang, Shenzhen, 518118 (CN); GUO, Chunguang, Shenzhen, 518118 (CN); QIN, Shuai, Shenzhen, 518118 (CN); ZHA, Bao, Shenzhen, 518118 (CN)
(74) Representative: Mathys & Squire

(57) **Abstract**

The present disclosure provides an in-vehicle communication system and a vehicle. The in-vehicle communication system includes a first optical device, N second optical devices, and an optical channel. Two ends of the optical channel are connected to the first optical device. The optical channel is further connected to the N second optical devices respectively. The N second optical devices correspond to N different first operating wavelengths. The first optical device is configured to transmit a first optical carrier to the optical channel. A wavelength of the first optical carrier includes the N first operating wavelengths. A second optical device i in the N second optical devices is configured to receive a second optical carrier i in the first optical carrier from the optical channel, and transmit a first optical signal i obtained through modulation based on the second optical carrier i back to the optical channel. A wavelength of the second optical carrier i is same as a first operating wavelength i corresponding to the second optical device i. The in-vehicle communication system provided in the present disclosure has a high communication rate, good communication quality, and strong applicability and practicality in an in-vehicle communication scenario.

## Description

### FIELD

The present disclosure relates to the field of in-vehicle communication technologies, and in particular, to an in-vehicle communication system and a vehicle.

### BACKGROUND

With the development of new technologies such as unmanned driving and smart transportation, and increasing demands of people for in-vehicle video and audio entertainment, people gradually pay attention to performance of in-vehicle communication systems.

A conventional in-vehicle communication system is generally implemented based on a controller area network (CAN) bus, a local interconnect network (LIN) bus, or the like. However, due to continuous upgrading of a vehicle for demands such as autonomous driving and a smart cockpit, a quantity of electronic control units (ECUs) and a computing capability requirement are explosively increased, and there are increasing requirements for transmission of real-time information. However, a bandwidth of the conventional in-vehicle communication system is limited, and signal transmission quality of the conventional in-vehicle communication system is also easily affected due to complex electromagnetic wave interference in an in-vehicle environment. Therefore, a communication rate and communication quality of the conventional in-vehicle communication system have gradually failed to meet a use demand for the vehicle. Therefore, how to improve a communication rate and communication quality of an in-vehicle communication system has become one of technical problems that need to be resolved.

### SUMMARY

Embodiments of the present disclosure provide an in-vehicle communication system and a vehicle. Through the in-vehicle communication system, problems of a low communication rate and poor communication quality of an existing in-vehicle communication system can be resolved.

According to a first aspect, an embodiment of the present disclosure provides an in-vehicle communication system. The in-vehicle communication system includes a first optical device, N second optical devices, and an optical channel. Two ends of the optical channel are respectively connected to the first optical device. The N second optical devices are respectively connected to the optical channel. The N second optical devices correspond to N different first operating wavelengths. N is a positive integer greater than or equal to 1. The first optical device is configured to transmit a first optical carrier to the optical channel. A wavelength of the first optical carrier includes N first operating wavelengths. A second optical device i in the N second optical devices is configured to receive a second optical carrier i in the first optical carrier from the optical channel, and transmit a first optical signal i obtained through modulation based on the second optical carrier i back to the optical channel. A wavelength of the second optical carrier i is a first operating wavelength i corresponding to the second optical device i. Transmission directions of the first optical signal i and the first optical carrier in the optical channel are same.

In the foregoing implementation, because the in-vehicle communication system is based on optical transmission, a high-speed data stream formed by optical carriers can be used to meet a high-bandwidth communication requirement, and degradation of communication quality caused by electromagnetic wave interference can also be avoided. In addition, because an optical carrier required by each second optical device in the in-vehicle communication system is provided by the first optical device, there is no need to arrange a light source in each second optical device. In this way, a problem that the second device is not easy to arrange due to a high in-vehicle temperature can be resolved, thereby ensuring applicability and practicality of the in-vehicle communication system in an in-vehicle communication scenario. Therefore, the in-vehicle communication system provided in the present disclosure has a high communication rate, good communication quality, and strong applicability and practicality in the in-vehicle communication scenario. Through the in-vehicle communication system provided in the present disclosure, a problem of poor applicability of the conventional in-vehicle communication system caused by a low communication rate and poor communication quality can be effectively resolved.

With reference to the first aspect, in a feasible implementation, the first optical device is further configured to receive, from the optical channel, M first optical signals from M second optical devices in the N second optical devices. M is a positive integer less than or equal to N.

With reference to the first aspect, in a feasible implementation, the optical channel includes N optical selection devices. The N second optical devices are respectively connected to the N optical selection devices. An optical selection device i connected to the second optical device i in the N optical selection devices is configured to transmit the second optical carrier i in the received first optical carrier to the second optical device i, and transmit an other optical carrier other than the second optical carrier i in the received first optical carrier back to the optical channel. The optical selection device i is further configured to transmit the first optical signal i from the second optical device i back to the optical channel. In the foregoing implementation, the N optical selection devices form the optical channel. In this way, the optical selection devices can separate optical carriers required by the second optical devices and provide the optical carriers to the second optical devices. The solution is simple and reliable, and may ensure reliability of the in-vehicle communication system while reducing costs of the in-vehicle communication system.

With reference to the first aspect, in a feasible implementation, the optical selection device i includes a first filter device and a multiplexing device. The first filter device is connected to the multiplexing device. The first filter device is configured to transmit the second optical carrier i in the first optical carrier received from the optical channel to the second optical device i, and transmit the other optical carrier other than the second optical carrier i in the received first optical carrier to the multiplexing device. The multiplexing device is configured to transmit the other optical carrier back to the optical channel. The multiplexing device is further configured to transmit the first optical signal i emitted by the second optical device i back to the optical channel. The optical selection device i includes a first filter device and a multiplexing device. The first filter device is connected to the multiplexing device. In the foregoing implementation, the optical selection device is implemented through the filter device and the multiplexing device, thereby facilitating reducing an optical loss of the in-vehicle communication system.

With reference to the first aspect, in a feasible implementation, the optical channel further includes a number of first waveguides. The N optical selection devices are connected in series through the number of first waveguides to form the optical channel. Two ends of the N optical selection devices connected in series are connected to the first optical device through or as the two ends of the optical channel. The first filter device is further connected to an end of a first waveguide j1 in the number of first waveguides and the second optical device i. The multiplexing device is further connected to an end of a first waveguide j2 in the number of first waveguides and the second optical device i.

With reference to the first aspect, in a feasible implementation, the second optical device i includes a first signal processing module and a second signal processing module. The first signal processing module is connected to the second signal processing module, the first filter device, and the multiplexing device respectively. The second signal processing module is configured to generate a first baseband signal, and transmit the first baseband signal to the first signal processing module. The first signal processing module is configured to perform modulation on the second optical carrier i from the first filter device based on the first baseband signal, to obtain the first optical signal i, and transmit the first optical signal i to the multiplexing device.

With reference to the first aspect, in a feasible implementation, the first signal processing module includes an optical switch, a first photodetector, and a first optical modulator. The optical switch is connected to the first filter device, the first photodetector, and the first optical modulator respectively. The first optical modulator is further connected to the second signal processing module and the multiplexing device. The optical switch is configured to establish an optical path between the first filter device and the first optical modulator and disconnect an optical path between the first filter device and the first photodetector, to transmit the second optical carrier i to the first optical modulator. The first optical modulator is configured to perform modulation on the second optical carrier i based on the first baseband signal, to obtain the first optical signal i, and transmit the first optical signal i to the multiplexing device. In the foregoing implementation, optical path switching inside the first signal processing module is implemented through the optical switch, so that the first signal processing module can implement transmitting and receiving functions for an optical signal. In this way, structural complexity of the second optical device can be reduced, thereby reducing costs of the in-vehicle communication system.

With reference to the first aspect, in a feasible implementation, the second signal processing module is further configured to control, if it is determined that the first optical device is configured to output the first optical carrier, the optical switch to establish the optical path between the first filter device and the first optical modulator and disconnect the optical path between the first filter device and the first photodetector.

With reference to the first aspect, in a feasible implementation, the first optical device includes a third signal processing module, a first light source, a second optical modulator, a photodetection module, and a wavelength division multiplexer. The third signal processing module is connected to the first light source, the second optical modulator, and the photodetection module respectively. The first light source is connected to a first optical selection device in the N optical selection devices through the second optical modulator. The photodetection module is connected to a second optical selection device in the N optical selection devices through the wavelength division multiplexer. The first optical selection device and the second optical selection device are located at the two ends of the N optical selection devices connected in series.

With reference to the first aspect, in a feasible implementation, the third signal processing module is configured to control the first light source to generate the first optical carrier, and control the second optical modulator not to perform modulation on the first optical carrier. The first light source is configured to transmit the first optical carrier to the first optical selection device through the second optical modulator. The wavelength division multiplexer is configured to decompose an optical signal from the second optical selection device into the M first optical signals, and transmit the M first optical signals respectively to the photodetection module. The photodetection module is configured to convert the M first optical signals into M first electrical signals, and transmit the M first electrical signals to the third signal processing module.

With reference to the first aspect, in a feasible implementation, the third signal processing module is further configured to control the first light source to generate a third optical carrier, and transmit a second baseband signal to the second optical modulator. A wavelength of the third optical carrier includes the N different first operating wavelengths. The second optical modulator is configured to perform modulation on the third optical carrier based on the second baseband signal, to obtain a second optical signal, and transmit the second optical signal to the first optical selection device, to transmit the second optical signal to the optical channel.

With reference to the first aspect, in a feasible implementation, the optical switch is configured to disconnect the optical path between the first filter device and the first optical modulator and establish the optical path between the first filter device and the first photodetector. The first filter device is configured to transmit, through the optical switch, a third optical signal in the second optical signal transmitted in the first waveguide j1 to the first photodetector, and transmit an other optical signal other than the third optical signal in the second optical signal transmitted in the first waveguide j1 back to the optical channel. A wavelength of the third optical signal is same as the first operating wavelength i corresponding to the second optical device i. The first photodetector is configured to convert the third optical signal into a second electrical signal, and transmit the second electrical signal to the second signal processing module.

With reference to the first aspect, in a feasible implementation, the second signal processing module is further configured to control, if it is determined that the first optical device is configured to output the second optical signal, the optical switch to disconnect the optical path between the first filter device and the first optical modulator and establish the optical path between the first filter device and the first photodetector.

With reference to the first aspect, in a feasible implementation, the first optical device outputs the first optical carrier and the second optical signal at different moments.

With reference to the first aspect, in a feasible implementation, the first signal processing module includes a first optical modulator. The first optical modulator is connected to the first filter device, the multiplexing device, and the second signal processing module respectively. The first optical modulator is configured to perform modulation on the second optical carrier i based on the first baseband signal, to obtain the first optical signal i, and transmit the first optical signal i to the multiplexing device.

With reference to the first aspect, in a feasible implementation, the second signal processing module is further configured to generate the first baseband signal and provide the first baseband signal to the first optical modulator if it is determined that the first optical device is configured to output the first optical carrier.

With reference to the first aspect, in a feasible implementation, the first optical device includes a third signal processing module, a first light source, a photodetection module, and a wavelength division multiplexer. The third signal processing module is connected to the first light source and the photodetection module respectively. The first light source is connected to a first optical selection device in the N optical selection devices through the second optical modulator. The photodetection module is connected to a second optical selection device in the N optical selection devices through the wavelength division multiplexer.

With reference to the first aspect, in a feasible implementation, the third signal processing module is configured to control the first light source to generate the first optical carrier. The first light source is configured to transmit the first optical carrier to the first optical selection device. The wavelength division multiplexer is configured to decompose, according to wavelengths, an optical signal from the second optical selection device into the M first optical signals, and transmit the M first optical signals respectively to the photodetection module. The photodetection module is configured to convert the M first optical signals into M first electrical signals, and transmit the M first electrical signals to the third signal processing module.

With reference to the first aspect, in a feasible implementation, the in-vehicle communication system further includes N second filter devices. The N second filter devices are connected in series through a number of second waveguides, to form a filter channel. An end of the filter channel is connected to the first optical device. The N second filter devices are respectively connected to the N second optical devices.

With reference to the first aspect, in a feasible implementation, the first optical device further includes a second light source and a second optical modulator. The second light source is connected to the third signal processing module and the second optical modulator respectively. The second optical modulator is further connected to an end of the filter channel and the third signal processing module. The second optical device i further includes a second photodetector. The second photodetector is connected to the second signal processing module and a target second filter device in the N second filter devices.

With reference to the first aspect, in a feasible implementation, the third signal processing module is further configured to control the second light source to generate a third optical carrier, and transmit a second baseband signal to the second optical modulator. A wavelength of the third optical carrier includes the N first operating wavelengths. The second optical modulator is configured to perform modulation on the third optical carrier based on the second baseband signal, to obtain a second optical signal, and transmit the second optical signal to the filter channel. The target second filter device is configured to transmit a third optical signal included in the second optical signal transmitted in the filter channel to the second photodetector, and transmit an other optical signal other than the third optical signal in the transmitted second optical signal back to the filter channel. A wavelength of the third optical signal is same as the first operating wavelength i corresponding to the second optical device i. The second photodetector is configured to convert the third optical signal into a second electrical signal, and transmit the second electrical signal to the second signal processing module.

In the foregoing implementation, signal uplink transmission is implemented by using the optical channel, and signal downlink transmission is implemented by using the filter channel. In this way, the in-vehicle communication system can support synchronous uplink and downlink transmission of signals, thereby improving signal transmission efficiency and applicability of the in-vehicle communication system.

With reference to the first aspect, in a feasible implementation, the in-vehicle communication system further includes an optical splitter. The optical splitter is connected to the first optical device and the N second optical devices respectively.

With reference to the first aspect, in a feasible implementation, the first optical device further includes a third light source and a second optical modulator. The third light source is connected to the third signal processing module and the second optical modulator respectively. The second optical modulator is further connected to the optical splitter and the third signal processing module. The second optical device i further includes a second photodetector. The second photodetector is connected to the second signal processing module and the optical splitter.

With reference to the first aspect, in a feasible implementation, the third signal processing module is further configured to control the third light source to generate a fourth optical carrier, and transmit a second baseband signal to the second optical modulator. A wavelength of the fourth optical carrier is a second operating wavelength shared by the N second optical devices. The second optical modulator is configured to perform modulation on the fourth optical carrier based on the second baseband signal, to obtain a second optical signal, and transmit the second optical signal to the optical splitter. The optical splitter is configured to split the second optical signal to obtain N third optical signals, and transmit the N third optical signals respectively to the N second optical devices. The second photodetector is configured to convert a received third optical signal into a second electrical signal, and transmit the second electrical signal to the second signal processing module.

In the foregoing implementation, signal uplink transmission is implemented by using the optical channel, and splitting of a downlink optical signal is implemented by using the optical splitter. In this way, the in-vehicle communication system can support synchronous uplink and downlink transmission of signals, thereby improving signal transmission efficiency and applicability of the in-vehicle communication system.

With reference to the first aspect, in a feasible implementation, the in-vehicle communication system further includes an in-vehicle controller. The in-vehicle controller is connected to the third signal processing module. The third signal processing module is further configured to perform filtering and amplification on the M first electrical signals, to obtain M processed first electrical signals, and transmit the M processed first electrical signals to the in-vehicle controller. In addition/alternatively, the in-vehicle controller is further configured to transmit first data to the third signal processing module, and the third signal processing module is configured to generate the second baseband signal based on the first data.

With reference to the first aspect, in a feasible implementation, the in-vehicle communication system further includes an in-vehicle device. The in-vehicle device is connected to the second signal processing module. The in-vehicle device is further configured to transmit second data to the second signal processing module, and the second signal processing module is configured to generate the first baseband signal based on the second data. In addition/alternatively, the second signal processing module is configured to perform filtering and amplification on a first electrical signal, to obtain a processed first electrical signal, and transmit the processed first electrical signal to the in-vehicle device.

With reference to the first aspect, in a feasible implementation, the photodetection module includes a third photodetector. The third photodetector is connected to the third signal processing module and the wavelength division multiplexer respectively. The wavelength division multiplexer is configured to transmit the M first optical signals respectively to the third photodetector at different moments. The third photodetector is configured to convert each received first optical signal into a second electrical signal, and transmit each second electrical signal obtained through conversion to the third signal processing module.

With reference to the first aspect, in a feasible implementation, the photodetection module includes N third photodetectors. The N third photodetectors are respectively connected to the third signal processing module and the wavelength division multiplexer. The wavelength division multiplexer is configured to transmit the M first optical signals respectively to M third photodetectors in the N third photodetectors. Any third photodetector in the M third photodetectors is configured to convert a received first optical signal into a second electrical signal, and transmit the second electrical signal obtained through conversion to the third signal processing module.

With reference to the first aspect, in a feasible implementation, the optical channel is a closed ring network channel.

According to a second aspect, the present disclosure provides a vehicle. The vehicle includes the in-vehicle communication system according to the first aspect and any one of descriptions in the first aspect.

With reference to the second aspect, in a feasible implementation, the first optical device in the in-vehicle communication system is arranged around a central computing platform of the vehicle.

The embodiments of the present disclosure are implemented, so that the in-vehicle communication system can have a high communication rate, good communication quality, and strong applicability and practicality in the in-vehicle communication scenario. Therefore, through the in-vehicle communication system provided in the present disclosure, a problem of poor applicability of the conventional in-vehicle communication system caused by a low communication rate and poor communication quality can be effectively resolved.

### BRIEF DESCRIPTION OF THE DRAWINGS

To describe the technical solutions of the embodiments of the present disclosure or the related art more clearly, the following briefly introduces the drawings required for describing the embodiments or the related art. Apparently, the drawings in the following description show only some embodiments recorded in the present disclosure, and a person of ordinary skill in the art still derives other drawings from these drawings without creative efforts.
FIG. 1 is a schematic structural diagram of an in-vehicle communication system according to the present disclosure;
FIG. 2 is still another schematic structural diagram of an in-vehicle communication system according to the present disclosure;
FIG. 3 is a schematic structural diagram of an optical selection device according to the present disclosure;
FIG. 4 is a schematic structural diagram of a second optical device according to the present disclosure;
FIG. 5 is still another schematic structural diagram of a second optical device according to the present disclosure;
FIG. 6 is still another schematic structural diagram of an in-vehicle communication system according to the present disclosure;
FIG. 7 is still another schematic structural diagram of a second optical device according to the present disclosure;
FIG. 8 is a schematic structural diagram of a first optical device according to the present disclosure;
FIG. 9 is still another schematic structural diagram of an in-vehicle communication system according to the present disclosure;
FIG. 10 is still another schematic structural diagram of an in-vehicle communication system according to the present disclosure;
FIG. 11 is still another schematic structural diagram of an in-vehicle communication system according to the present disclosure;
FIG. 12 is still another schematic structural diagram of an in-vehicle communication system according to the present disclosure;
FIG. 13 is still another schematic structural diagram of an in-vehicle communication system according to the present disclosure;
FIG. 14 is still another schematic structural diagram of an in-vehicle communication system according to the present disclosure;
FIG. 15 is a schematic structural diagram of a vehicle according to an embodiment of the present disclosure; and
FIG. 16 is still another schematic structural diagram of a vehicle according to an embodiment of the present disclosure.

### DETAILED DESCRIPTION

To make a person skilled in the art better understand solutions of the present disclosure, the following clearly and completely describes technical solutions in embodiments of the present disclosure with reference to the drawings in the embodiments of the present disclosure.

The following describes a system architecture to which the embodiments of the present disclosure are applied. It should be noted that, the system architecture and an application scenario described in the embodiments of the present disclosure are intended to describe the technical solutions in the present disclosure more clearly, and do not constitute limitations to the technical solutions in the present disclosure. In addition, the technical solutions provided in the embodiments of the present disclosure are also applicable to a similar technical problem as the system architecture evolves and a new service scenario emerges.

Due to continuous upgrading of a vehicle for demands such as autonomous driving and a smart cockpit, a quantity of electronic control units (ECUs) and a computing capability requirement are explosively increased, and there are increasing requirements for transmission of real-time information. However, a bandwidth of a conventional in-vehicle communication system is limited, and signal transmission quality of the conventional in-vehicle communication system is also easily affected due to complex electromagnetic wave interference in an in-vehicle environment. Therefore, a communication rate and communication quality of the conventional in-vehicle communication system have gradually failed to meet a use demand for the vehicle.

Therefore, a technical problem to be resolved in the present disclosure is how to improve a communication rate and communication quality of an in-vehicle communication system.

To resolve the foregoing technical problem, the present disclosure provides an in-vehicle communication system. The in-vehicle communication system includes a first optical device, N second optical devices, and an optical channel. Two ends of the optical channel are connected to the first optical device. The N second optical devices are respectively connected to the optical channel. The N second optical devices respectively correspond to N different first operating wavelengths. In actual operation, the first optical device provides, to each second optical device through the optical channel, an optical carrier required by each second optical device to emit an optical signal. Because the in-vehicle communication system provided in the present disclosure is based on optical transmission, a high-speed data stream formed by optical carriers can be used to meet a high-bandwidth communication requirement, and degradation of communication quality caused by electromagnetic wave interference can also be avoided. In addition, because the optical carrier required by each second optical device in the in-vehicle communication system provided in the present disclosure is provided by the first optical device, there is no need to arrange a light source in each second optical device. In this way, a problem that the second device is not easy to arrange due to a high in-vehicle temperature can be resolved, thereby ensuring applicability and practicality of the in-vehicle communication system in an in-vehicle communication scenario. Based on the above, the in-vehicle communication system provided in the present disclosure has a high communication rate, good communication quality, and strong applicability and practicality in the in-vehicle communication scenario. Therefore, through the in-vehicle communication system provided in the present disclosure, a problem of poor applicability of the conventional in-vehicle communication system caused by a low communication rate and poor communication quality can be effectively resolved.

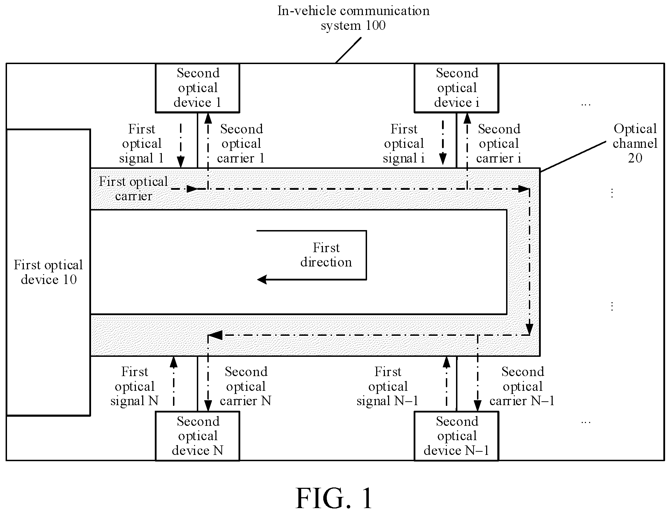

Referring to FIG. 1, FIG. 1 is a schematic structural diagram of an in-vehicle communication system according to the present disclosure. As shown in FIG. 1, an in-vehicle communication system 100 includes a first optical device 10, N second optical devices, and an optical channel 20. N is a positive integer greater than or equal to 1. The N second optical devices may specifically include a second optical device 1, a second optical device i, ..., and a second optical device N shown in FIG. 1. The second optical device i may be any second optical device in the N second optical devices. Two ends of the optical channel 20 are respectively connected to the first optical device 10. The optical channel 20 is further connected to the N second optical devices respectively. The N second optical devices correspond to N different first operating wavelengths. Alternatively, an operating wavelength of each second optical device in the N second optical devices is different, and the operating wavelength of each second optical device is one of the N first operating wavelengths.

In actual operation, the first optical device 10 may be configured to generate and transmit a first optical carrier to the optical channel 20. A wavelength of the first optical carrier includes the N first operating wavelengths. Alternatively, the first optical carrier includes N second optical carriers whose wavelengths are respectively the N first operating wavelengths. Assuming that a transmission direction of the first optical carrier in the optical channel 20 is a first direction, the first direction may also be understood as an arrangement direction of the second optical device 1, a second optical device 2, ..., and the second optical device N.

It should be noted that, in the solution provided in the present disclosure, a structure and a function of each second optical device in the N second optical devices are similar. To avoid encumbrance, in the embodiments of the present disclosure, any second optical device (namely, the second optical device i described above) in the N second optical devices is used as an example, to describe structures and operating principles of the N second optical devices provided in the present disclosure.

The second optical device i in the N second optical devices is configured to receive a second optical carrier i in the first optical carrier from the optical channel 20, perform modulation based on the second optical carrier i to obtain a first optical signal i, and transmit the first optical signal i back to the optical channel 20. It should be understood that, in actual implementation, the N second optical devices receive N second optical carriers: a second optical carrier 1, a second optical carrier 2, a second optical carrier i, ..., and a second optical carrier N from the optical channel 20. It is assumed that the second optical device i receives the second optical carrier i. Similarly, the N second optical devices generate N first optical signals: a first optical signal 1, a first optical signal 2, a first optical signal i, ..., and a first optical signal N. It is assumed that the second optical device i generates the first optical signal i. A wavelength of the second optical carrier i received by the second optical device i is same as a first operating wavelength i corresponding to the second optical device i. In other words, the wavelength of the second optical carrier i is the first operating wavelength i corresponding to the second optical device i. In addition, a transmission direction (or traveling direction) of the first optical signal i in the optical channel 20 and the transmission direction of the first optical carrier in the optical channel 20 are same, and both are the first direction described above. It should be understood that, when the first optical carrier is transmitted in the optical channel 20, each second optical device receives only a second optical carrier corresponding to the operating wavelength of each second optical device, and a remaining part of the first optical carrier is continuously transmitted along the first direction until the remaining part of the first optical carrier is received by all second optical devices or returned to the first optical device 10.

For example, in actual operation, the second optical device 1 receives, from the first optical carrier, only the second optical carrier 1 whose wavelength is a first operating wavelength corresponding to the second optical device 1, performs modulation based on the second optical carrier 1 to obtain the first optical signal 1, and transmits the first optical signal 1 back to the optical channel 20. In this case, the remaining part of the first optical carrier other than the second optical carrier 1 continuously travels along the first direction. Further, the second optical device 2 receives, from the first optical carrier, only the second optical carrier 2 whose wavelength is a first operating wavelength corresponding to the second optical device 2, performs modulation based on the second optical carrier 2 to obtain the first optical signal 2, and transmits the first optical signal 2 back to the optical channel 20. In this case, a remaining part other than the second optical carrier 1 and the second optical carrier 2 in the first optical carrier continuously travels along the first direction. By analogy, ideally, the second optical device N receives, in the first optical carrier, the second optical carrier N whose wavelength is a first operating wavelength corresponding to the second optical device N, performs modulation based on the second optical carrier N to obtain the first optical signal N, and transmits the first optical signal N back to the optical channel 20. In this case, the first optical carrier has been decomposed and received completely.

In the foregoing implementation, an in-vehicle communication system 100 includes a first optical device 10, N second optical devices, and an optical channel 20. The first optical device 10 provides, to each second optical device through the optical channel 20, an optical carrier required by each second optical device to emit an optical signal. Because the in-vehicle communication system is based on optical transmission, a high-speed data stream formed by optical carriers can be used to meet a high-bandwidth communication requirement, and degradation of communication quality caused by electromagnetic wave interference can also be avoided. In addition, because an optical carrier required by each second optical device in the in-vehicle communication system is provided by the first optical device, there is no need to arrange a light source in each second optical device. In this way, a problem that the second device is not easy to arrange due to a high in-vehicle temperature can be resolved, thereby ensuring applicability and practicality of the in-vehicle communication system in an in-vehicle communication scenario. Therefore, the in-vehicle communication system provided in the present disclosure has a high communication rate, good communication quality, and strong applicability and practicality in the in-vehicle communication scenario. Through the in-vehicle communication system provided in the present disclosure, a problem of poor applicability of the conventional in-vehicle communication system caused by a low communication rate and poor communication quality can be effectively resolved.

Optionally, the first optical device 10 is further configured to receive, from the optical channel 20, M first optical signals from M second optical devices in the N second optical devices. M is a positive integer less than or equal to N. It should be noted that, in actual operation, one or more second optical devices may not generate corresponding first optical signals i after receiving corresponding second optical carriers i. Therefore, the actual number of first optical signals i received by the first optical device from the optical channel 20 is less than or equal to N.

Optionally, the optical channel 20 is a closed ring network channel.

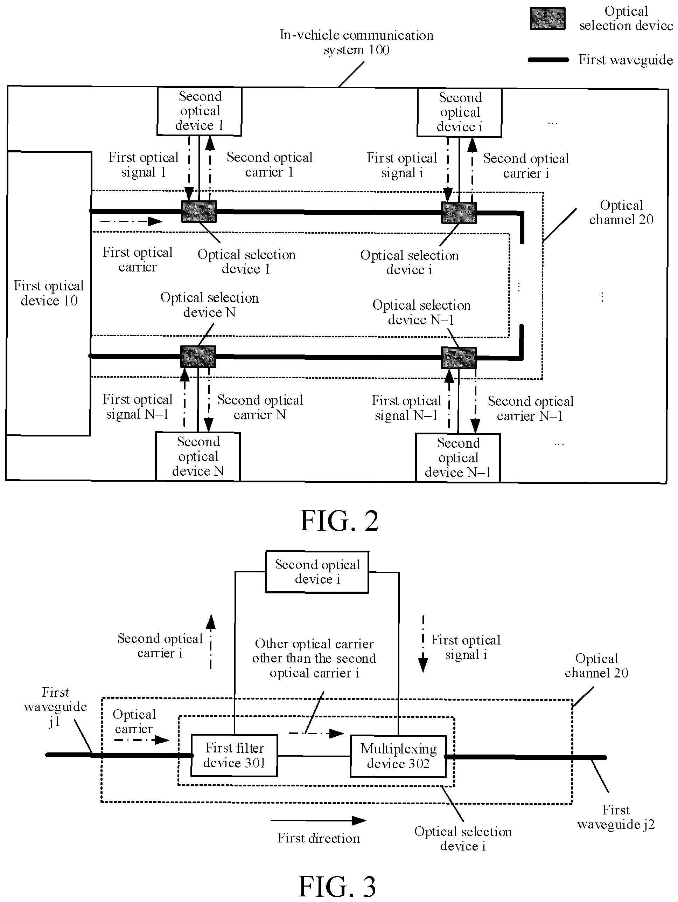

In some feasible implementations, referring to FIG. 2, FIG. 2 is still another schematic structural diagram of an in-vehicle communication system according to the present disclosure. As shown in FIG. 2, the optical channel 20 includes N optical selection devices. The N second optical devices are respectively connected to the N optical selection devices. It should be understood that, one second optical device in the N second optical devices is connected to only one optical selection device in the N optical selection devices. The N optical selection devices may specifically include an optical selection device 1, an optical selection device 2, an optical selection device i, ..., and an optical selection device N described in FIG. 2.

It should be noted that, in the solution provided in the present disclosure, a structure and a function of each optical selection device in the N optical selection devices are similar (where an only difference is that a selectable wavelength is different). To avoid encumbrance, in the embodiments of the present disclosure, the optical selection device i connected to the second optical device i in the N optical selection devices is used as an example, to describe a structure and an operating principle of the optical channel 20 provided in the present disclosure.

In actual operation, the optical selection device i may be configured to separate the second optical carrier i from the received first optical carrier, and transmit the second optical carrier i to the second optical device i. The optical selection device i is further configured to transmit an other optical carrier other than the second optical carrier i in the received first optical carrier back to the optical channel 20, so that the other optical carrier can be continuously transmitted in the optical channel 20 along the first direction. Further, when the second optical device i further performs modulation on the second optical carrier i to obtain the first optical signal i, the optical selection device i is further configured to receive the first optical signal i from the second optical device i, and transmit the first optical signal i back to the optical channel 20.

For example, the optical selection device 2 connected to the second optical device 2 is used as an example. In actual operation, the optical selection device 2 may be configured to separate the second optical carrier 2 from the received first optical carrier, and transmit the second optical carrier 2 to the second optical device 2. In addition, the optical selection device 2 is further configured to transmit an other optical carrier other than the second optical carrier 2 and the second optical carrier 1 (which has been received by the second optical device 1) in the received first optical carrier back to the optical channel 20, so that the other optical carrier can be continuously transmitted in the optical channel 20 along the first direction. Further, when the second optical device 2 further performs modulation on the second optical carrier 2 to obtain the first optical signal 2, the optical selection device 2 is further configured to receive the first optical signal 2 from the second optical device 2, and transmit the first optical signal 2 back to the optical channel 20.

In the foregoing implementation, the N optical selection devices form the optical channel 20. In this way, the optical selection devices can separate optical carriers required by the second optical devices and provide the optical carriers to the second optical devices. The solution is simple and reliable, and may ensure reliability of the in-vehicle communication system 100 while reducing costs of the in-vehicle communication system 100.

In some feasible implementations, based on a structure shown in FIG. 2, referring to FIG. 3, FIG. 3 is a schematic structural diagram of an optical selection device according to the present disclosure. As shown in FIG. 3, the optical selection device i may specifically include a first filter device 301 and a multiplexing device 302. The first filter device 301 is connected to the multiplexing device 302.

In actual operation, the first filter device 301 is configured to receive the first optical carrier transmitted along the first direction, separate the second optical carrier i from the first optical carrier, and transmit the second optical carrier i to the second optical device i. In addition, the first filter device 301 is further configured to transmit the other optical carrier other than the second optical carrier i in the first optical carrier received by the first filter device 301 to the multiplexing device 302. The multiplexing device 302 may be configured to transmit the other optical carrier from the first filter device 301 back to the optical channel 20. When the second optical device i further performs modulation on the second optical carrier i to obtain the first optical signal i, the multiplexing device 302 is further configured to receive the first optical signal i from the second optical device i, and transmit the first optical signal i back to the optical channel 20.

In the foregoing implementation, the optical selection device is implemented through the filter device and the multiplexing device. The solution is simple and easy to implement, thereby facilitating reducing costs and an optical loss of the in-vehicle communication system 100.

It should further be noted that, the filter device involved in the present disclosure is an optical device that can separate, from an incident light beam, a light beam with a specific wavelength and an other light beam other than the light beam with the specific wavelength, and emit them through different interfaces. The filter device may be specifically a filter segment, a filter grating, or the like having the foregoing function. A specific implementation form of the filter device is not limited in the present disclosure as long as the filter device can implement the foregoing function. It should further be noted that, the multiplexing device involved in the present disclosure is an optical device that can multiplex and couple different light beams into a same waveguide. For example, the multiplexing device is a diffraction grating, a prism, a waveguide, or the like having the function. A specific implementation form of the multiplexing device is not limited in the present disclosure as long as the multiplexing device can implement the foregoing function.

In some feasible implementations, as shown in FIG. 2 and FIG. 3, the optical channel 20 may further include a number of first waveguides. The N optical selection devices are connected in series through the number of first waveguides to form the optical channel 20. Two ends of the N optical selection devices connected in series are connected to the first optical device 10 through or as the two ends of the optical channel 20.

Further, a first filter device included in each second optical device is further connected to one first waveguide and one second optical device respectively. A multiplexing device included in each second optical device is further connected to another first waveguide and one second optical device respectively. The second optical device i is used as an example. The first filter device included in the second optical device i is further connected to an end of a first waveguide j1 in the number of first waveguides and the second optical device i. The multiplexing device included in the second optical device i is further connected to an end of a first waveguide j2 in the number of first waveguides and the second optical device i.

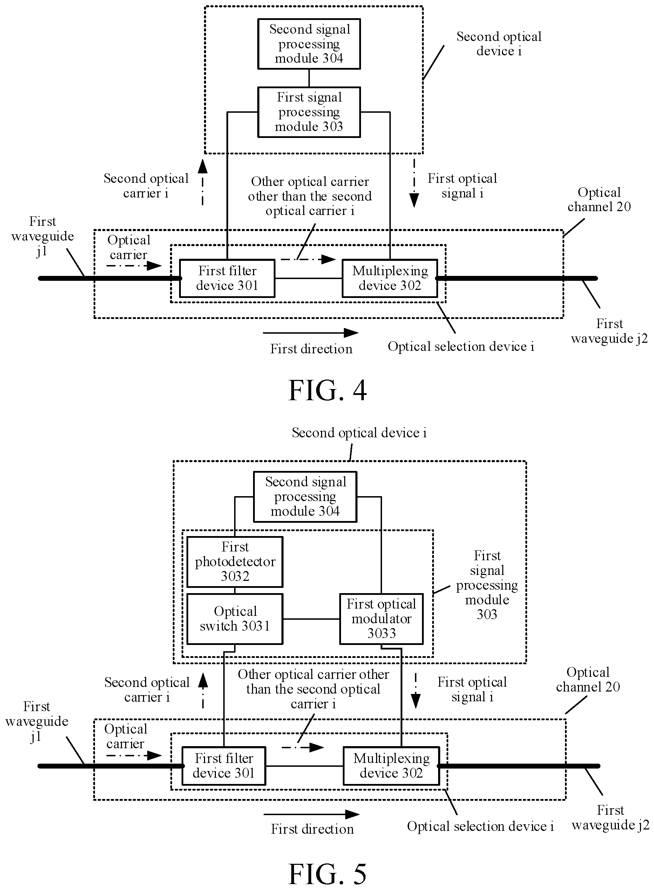

In some feasible implementations, based on a structure shown in FIG. 2 or FIG. 3, referring to FIG. 4, FIG. 4 is a schematic structural diagram of a second optical device according to the present disclosure. As shown in FIG. 4, the second optical device i may include a first signal processing module 303 and a second signal processing module 304. The first signal processing module 303 is connected to the second signal processing module 304, the first filter device 301, and the multiplexing device 302 respectively.

In actual operation, when the second optical device i needs to transmit the first optical signal i, the second signal processing module 304 is configured to generate a first baseband signal, and transmit the first baseband signal to the first signal processing module 303. The first signal processing module 303 is configured to perform modulation on the second optical carrier i from the first filter device 301 based on the first baseband signal, to obtain the first optical signal i, and transmit the first optical signal i to the multiplexing device 302. The multiplexing device 302 transmits the first optical signal i to the first waveguide j2, so that the first optical signal i can be transmitted in the optical channel 20 along the first direction.

It should further be noted that, in the technical solution provided in the present disclosure, the first signal processing module 303 may be understood as an optical chip in the second optical device i, which is mainly configured to implement functions such as generation and processing of an optical signal. The second signal processing module 304 may be understood as an electrical chip in the second optical device i, which is mainly configured to implement functions such as generation and processing of an electrical signal required by the second optical device i. Optionally, the second signal processing module may include a photoelectric signal driving and processing part, a MAC-PHY chip of a physical layer and a data link layer, and the like.

In a feasible implementation, based on a structure shown in FIG. 4, referring to FIG. 5, FIG. 5 is still another schematic structural diagram of a second optical device according to the present disclosure. As shown in FIG. 5, the first signal processing module 303 may include an optical switch 3031, a first photodetector 3032, and a first optical modulator 3033. The optical switch 3031 is connected to the first filter device 301, the first photodetector 3032, and the first optical modulator 3033 respectively. The first optical modulator 3033 is further connected to the second signal processing module 304 and the multiplexing device 302. The first photodetector 3032 is further connected to the second signal processing module 304.

In actual operation, when the first optical device 10 outputs the first optical carrier, the optical switch 3031 may be configured to establish an optical path between the first filter device 301 and the first optical modulator 3033 and disconnect an optical path between the first filter device 301 and the first photodetector 3032, to transmit the second optical carrier i to the first optical modulator 3033. The first optical modulator 3033 may receive the first baseband signal from the second signal processing module 304, perform modulation on the second optical carrier i based on the first baseband signal, to obtain the first optical signal i, and transmit the first optical signal i to the multiplexing device 302, to transmit the first optical signal i back to the optical channel 20.

Optionally, the second signal processing module 304 is further configured to control, if it is determined that the first optical device 10 is configured to output the first optical carrier, the optical switch 3031 to establish the optical path between the first filter device 301 and the first optical modulator 3033 and disconnect the optical path between the first filter device 301 and the first photodetector 3032, so that the second optical carrier i can be transmitted to the first optical modulator 3033 but not to the first photodetector 3032.

In the foregoing implementation, optical path switching inside the first signal processing module 303 is implemented through the optical switch 3031, so that the first signal processing module 303 can implement transmitting and receiving functions for an optical signal. In this way, structural complexity of the second optical device can be reduced, thereby reducing costs of the in-vehicle communication system 100.

It should further be noted that, the optical switch involved in the present disclosure may be a thermal modulation switch or an electrical modulation optical switch. This is not limited in the present disclosure. The photodetector involved in the present disclosure may be a photodiode or an avalanche photodiode based on a silicon-based silicon-germanium process, or may be a photodiode or an avalanche photodiode based on a III-V semiconductor. It should be understood that, this is only exemplary. In actual implementation, the photodetector involved in the present disclosure may also be implemented in another manner as long as it can be ensured that the photodetector is applicable to the technical solutions provided in the present disclosure. The optical modulator involved in the present disclosure may be a silicon-based optical modulator or a lithium niobate-based optical modulator. This is not limited in the present disclosure.

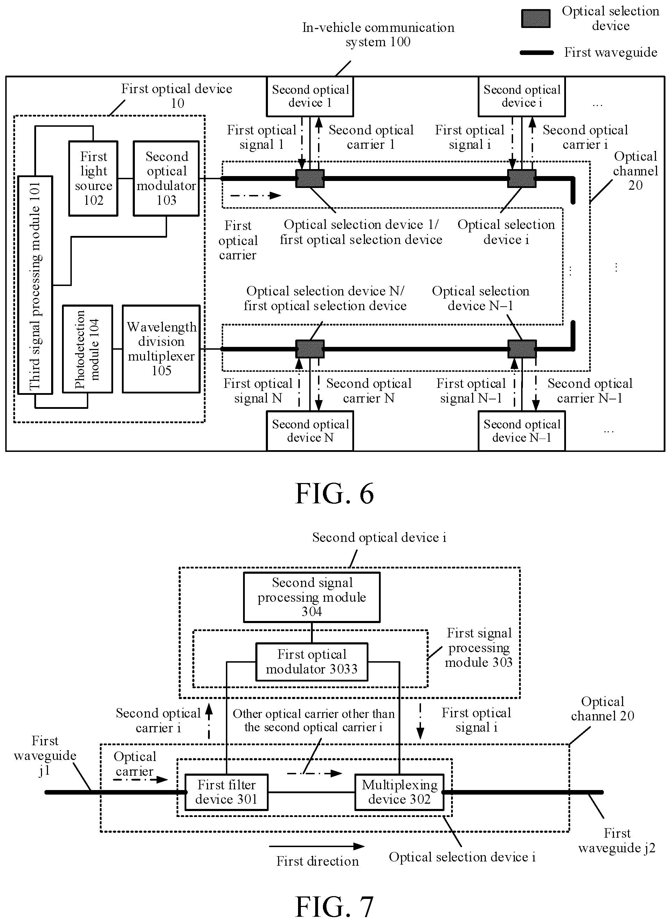

In an optional implementation, based on structures shown in FIG. 2 to FIG. 5, referring to FIG. 6, FIG. 6 is still another schematic structural diagram of an in-vehicle communication system according to the present disclosure. As shown in FIG. 6, the first optical device 10 may include a third signal processing module 101, a first light source 102, a second optical modulator 103, a photodetection module 104, and a wavelength division multiplexer 105. The third signal processing module 101 is connected to the first light source 102, the second optical modulator 103, and the photodetection module 104 respectively. The first light source 102 is further connected to a first optical selection device in the N optical selection devices through the second optical modulator 103. The photodetection module 104 is connected to a second optical selection device in the N optical selection devices through the wavelength division multiplexer 105. The first optical selection device and the second optical selection device are located at the two ends of the N optical selection devices connected in series. Alternatively, the first optical selection device and the second optical selection device are located at the two ends of the optical channel 20 connected to the first optical device 10. The first optical selection device may be the optical selection device 1 shown in FIG. 2 to FIG. 6. The second optical selection device may be the optical selection device N shown in FIG. 2 to FIG. 6.

In actual operation, when it is determined that the first optical carrier is emitted (which may also be understood as that a current transmission mode is determined as signal uplink transmission), the third signal processing module 101 is configured to control the first light source 102 to generate the first optical carrier, and control the second optical modulator 103 not to perform modulation on the first optical carrier. Alternatively, the second optical modulator 103 is controlled, so that the second optical modulator 103 directly transmits the first optical carrier received by the second optical modulator 103 to the first optical selection device. The first light source 102 is further configured to transmit the first optical carrier to the first optical selection device through the second optical modulator 103, to transmit the first optical carrier to the optical channel 20.

Further, the wavelength division multiplexer 105 may be configured to receive, through the second optical selection device, an optical signal transmitted in the optical channel 20, and decompose the optical signal into M first optical signals according to wavelengths. It should be understood that, the M first optical signals are respectively from the M second optical devices in the N second optical devices. A wavelength corresponding to each first optical signal is same as the operating wavelength of each second optical device in the M second optical devices. The wavelength division multiplexer 105 is further configured to transmit the M first optical signals obtained through decomposition respectively to the photodetection module 104. The photodetection module 104 is configured to process the M first optical signals respectively, to convert the M first optical signals into M first electrical signals. The photodetection module 104 is further configured to transmit the M first electrical signals obtained through conversion by the photodetection module 104 to the third signal processing module 101. The third signal processing module 101 may be configured to process the M first electrical signals, to obtain transmission data carried on each first electrical signal. It should be understood that, the transmission data carried on each first electrical signal is from the second optical device that emits the first optical signal corresponding to each first electrical signal.

Optionally, when it is determined that an optical signal is emitted (which may also be understood as that the current transmission mode is determined as signal downlink transmission), the third signal processing module 101 is further configured to control the first light source 102 to generate a third optical carrier. The first light source 102 is further configured to transmit the third optical carrier to the second optical modulator 103. A wavelength of the third optical carrier includes the N different first operating wavelengths. Alternatively, the third optical carrier is formed by at least N optical carriers whose wavelengths are the N first operating wavelengths respectively. The third signal processing module 101 is further configured to generate a second baseband signal and transmit the second baseband signal to the second optical modulator 103. It should be understood that, the second baseband signal carries downlink data. The third signal processing module 101 is further configured to control the second optical modulator 103 to normally operate. The second optical modulator 103 is configured to perform modulation on the third optical carrier provided by the first light source 102 based on the second baseband signal, to obtain a second optical signal, and transmit the second optical signal to the first optical selection device, to transmit the second optical signal to the optical channel 20.

Optionally, when the first optical device 10 emits the second optical signal to the optical channel 20, the optical switch 3031 is configured to disconnect the optical path between the first filter device 301 and the first optical modulator 3033 and establish the optical path between the first filter device 301 and the first photodetector 3032. The first filter device 301 is configured to transmit, through the optical switch 3031, a third optical signal (which may also be assumed as a third optical signal i) in the second optical signal transmitted in the first waveguide j1 to the first photodetector 3032, and transmit an other optical signal other than the third optical signal i in the second optical signal transmitted in the first waveguide j1 back to the optical channel 20. A wavelength of the third optical signal i is same as the first operating wavelength i corresponding to the second optical device i. It may also be understood that, the first filter device 301 transmits only an optical signal component at the first operating wavelength i to the first photodetector 3032 through the optical switch 3031. The first photodetector 3032 is configured to convert the third optical signal i from the first filter device 301 into a corresponding second electrical signal, and transmit the second electrical signal to the second signal processing module 304. Correspondingly, the second signal processing module 304 may perform further processing, for example, filtering and amplification, on the second electrical signal.

Optionally, the second optical signal (or each third optical signal included in the second optical signal) further carries a device identifier of at least one second optical device. In this case, after receiving the second electrical signal, the second signal processing module 304 first determines whether the device identifier of the at least one second optical device carried on the second electrical signal includes an identifier corresponding to the second optical device i. If it is determined that the device identifier of the at least one second optical device carried on the second electrical signal includes the identifier corresponding to the second optical device i, further processing may be performed on the second electrical signal. If it is determined that the device identifier of the at least one second optical device carried on the second electrical signal does not include the identifier corresponding to the second optical device i, no processing is performed on the second electrical signal.

Further, when it is determined that the first optical device 10 is configured to output the second optical signal, the second signal processing module 304 is further configured to control the optical switch 3031 to disconnect the optical path between the first filter device 301 and the first optical modulator 3033 and establish the optical path between the first filter device 301 and the first photodetector 3032.

In some feasible implementations, when structures shown in FIG. 2 to FIG. 6 are used, the first optical device 10 outputs the first optical carrier and the second optical signal at different moments. It may also be understood that, for the in-vehicle communication system 100 based on the structures shown in FIG. 2 to FIG. 6, signal uplink transmission and signal downlink transmission are performed in a time-sharing manner.

In some feasible implementations, based on the structure shown in FIG. 4, referring to FIG. 7, FIG. 7 is still another schematic structural diagram of a second optical device according to the present disclosure. As shown in FIG. 7, the first signal processing module 303 may include a first optical modulator 3033. The first optical modulator 3033 is connected to the first filter device 301, the multiplexing device 302, and the second signal processing module 304 respectively.

In actual operation, when the first optical device 10 outputs the first optical carrier, the first optical modulator 3033 is configured to receive the second optical carrier i from the first filter device 301. The first optical modulator 3033 may be further configured to receive the first baseband signal from the second signal processing module 304. The first optical modulator 3033 may be further configured to perform modulation on the second optical carrier i based on the first baseband signal, to obtain the first optical signal i, and transmit the first optical signal i to the multiplexing device 302, to transmit the first optical signal i back to the optical channel 20.

Optionally, the second signal processing module 304 is configured to generate the first baseband signal and provide the first baseband signal to the first optical modulator 3033 if it is determined that the first optical device 10 is configured to output the first optical carrier.

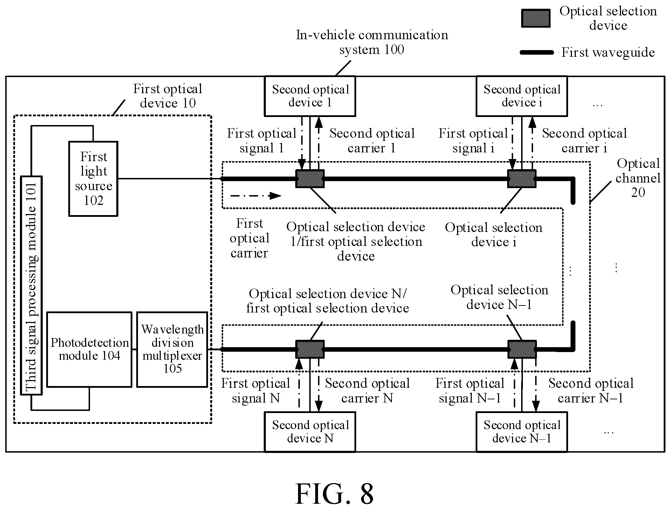

In a feasible implementation, based on a structure shown in FIG. 7, referring to FIG. 8, FIG. 8 is a schematic structural diagram of a first optical device according to the present disclosure. As shown in FIG. 8, the first optical device 10 may include a third signal processing module 101, a first light source 102, a photodetection module 104, and a wavelength division multiplexer 105. The third signal processing module 101 is connected to the first light source 102 and the photodetection module 104 respectively. The first light source 102 is further connected to a first optical selection device in the N optical selection devices. The photodetection module 104 is further connected to a second optical selection device in the N optical selection devices through the wavelength division multiplexer 105. The first optical selection device and the second optical selection device are located at the two ends of the N optical selection devices connected in series. Alternatively, the first optical selection device and the second optical selection device are located at the two ends of the optical channel 20 connected to the first optical device 10. The first optical selection device may be the optical selection device 1 shown in FIG. 8. The second optical selection device may be the optical selection device N shown in FIG. 8.

In actual operation, when it is determined that the first optical carrier is emitted (which may also be understood as that a current transmission mode is determined as signal uplink transmission), the third signal processing module 101 is configured to control the first light source 102 to generate the first optical carrier. The first light source 102 is further configured to transmit the first optical carrier to the first optical selection device, to transmit the first optical carrier to the optical channel 20.

Further, the wavelength division multiplexer 105 may be configured to receive, through the second optical selection device, an optical signal transmitted in the optical channel 20, and decompose the optical signal into M first optical signals. It should be understood that, the M first optical signals are respectively from the M second optical devices in the N second optical devices. A wavelength corresponding to each first optical signal is different. The wavelength division multiplexer 105 is further configured to transmit the M first optical signals obtained through decomposition respectively to the photodetection module 104. The photodetection module 104 is configured to process the M first optical signals respectively, to convert the M first optical signals into M first electrical signals. The photodetection module is further configured to transmit the M first electrical signals obtained through conversion by the photodetection module to the third signal processing module. The third signal processing module may be configured to process the M first electrical signals, to obtain transmission data carried on each first electrical signal. It should be understood that, the transmission data carried on each first electrical signal is from the second optical device that emits the first optical signal corresponding to each first electrical signal.

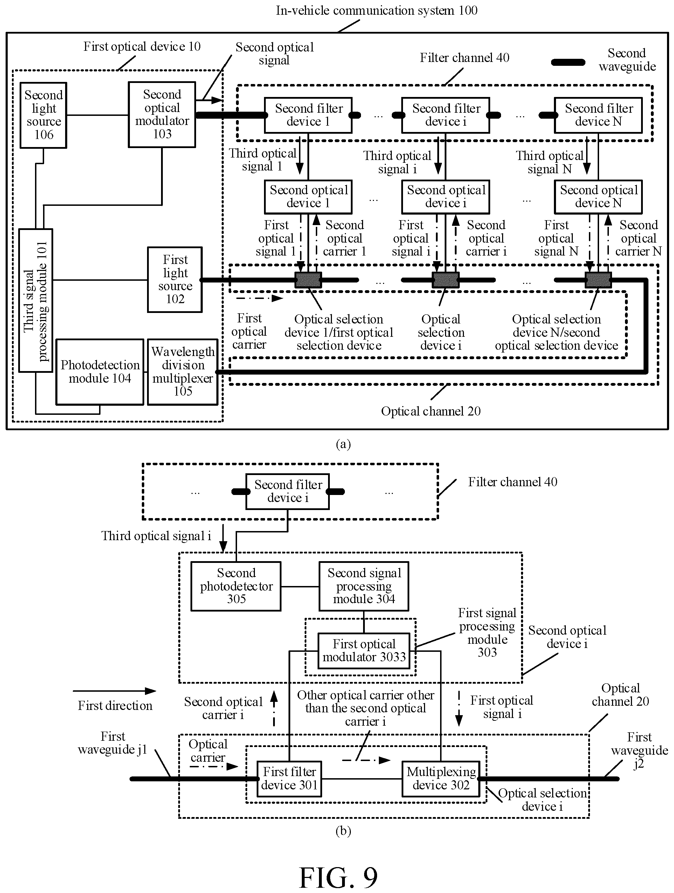

Optionally, based on the structure shown in FIG. 7 or FIG. 8, referring to FIG. 9, FIG. 9 is still another schematic structural diagram of an in-vehicle communication system according to the present disclosure. As shown in (a) of FIG. 9, the in-vehicle communication system 100 may further include N second filter devices. It should be understood that, the N second filter devices may include a second filter device 1, a second filter device i, ..., and a second filter device N shown in the figure. The second filter device i may be any second filter device. The N second filter devices are connected in series through a number of second waveguides, to form a filter channel 40. An end of the filter channel 40 is connected to the first optical device 10. The N second filter devices are respectively connected to the N second optical devices. The second filter device 1 in the filter channel 40 is connected to the first optical device 10 through a segment of second waveguide.

Further, as shown in (a) of FIG. 9, the first optical device 10 further includes a second light source 106 and a second optical modulator 103. The second light source 106 is connected to the third signal processing module 101 and the second optical modulator 103 respectively. The second optical modulator 103 is further connected to an end of the filter channel 40 and the third signal processing module 101. Specifically, the second optical modulator 103 may be connected to the second filter device 1 included in the filter channel 40 through a segment of second waveguide.

Further, as shown in (b) of FIG. 9, the second optical device i further includes a second photodetector 305. The second photodetector 305 is connected to the second signal processing module 304 and a target second filter device (that is, the second filter device i shown in the figure, where for ease of description, the second filter device i will be used to replace the target second filter device in the following descriptions) in the N second filter devices respectively. It should be understood that, in the solution provided in the present disclosure, a function of each second filter device in the N second filter devices is similar (where an only difference is that a filterable wavelength is different). To avoid encumbrance, in the embodiments of the present disclosure, the second filter device i connected to the second optical device i in the N second filter devices is used as an example, to describe operating principles of the N second filter devices provided in the present disclosure.

In actual implementation, when it is determined that an optical signal is emitted (which may also be understood as that the current transmission mode is determined as signal downlink transmission), the third signal processing module 101 is further configured to control the second light source 106 to generate a third optical carrier. The second light source 106 is further configured to transmit the generated third optical carrier to the second optical modulator 103. The third signal processing module 101 may be further configured to generate a second baseband signal and transmit the second baseband signal to the second optical modulator 103. A wavelength of the third optical carrier includes the N different first operating wavelengths. Alternatively, the third optical carrier is formed by at least N optical carriers whose wavelengths are the N first operating wavelengths respectively. The second optical modulator 103 is configured to perform modulation on the third optical carrier based on the second baseband signal, to obtain a second optical signal, and transmit the second optical signal to the filter channel 40.

Optionally, when the first optical device 10 emits the second optical signal to the filter channel 40, the second filter device i is configured to transmit a third optical signal i included in the second optical signal transmitted in the filter channel 40 to the second photodetector 305, and transmit an other optical signal other than the third optical signal i in the transmitted second optical signal back to the filter channel 40. A wavelength of the third optical signal i is same as the first operating wavelength i corresponding to the second optical device i. It should be understood that, ideally, the second filter device i transmits a third optical signal N transmitted in the filter channel 40 to a third photodetector included in the second optical device N. In this case, the second optical signal transmitted in the filter channel 40 has been completely decomposed.

The second photodetector 305 is configured to convert the third optical signal i from the second filter device i into a corresponding second electrical signal, and transmit the second electrical signal to the second signal processing module 304. Correspondingly, the second signal processing module 304 may perform further processing, for example, filtering and amplification, on the second electrical signal.

In the foregoing implementation, signal uplink transmission is implemented by using the optical channel 20, and signal downlink transmission is implemented by using the filter channel 40. In this way, the in-vehicle communication system 100 can support synchronous uplink and downlink transmission of signals, thereby improving signal transmission efficiency and applicability of the in-vehicle communication system 100.

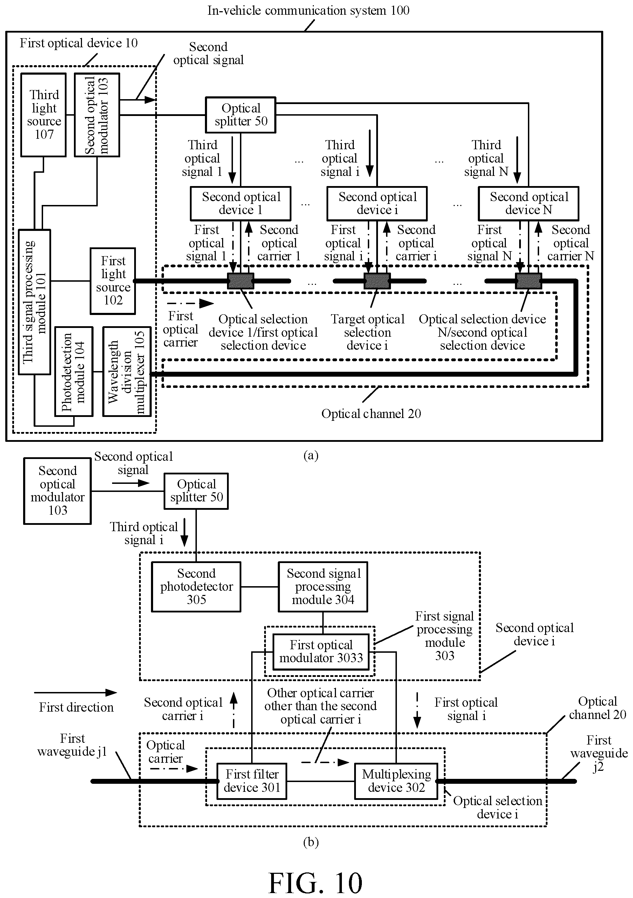

Optionally, based on the structure shown in FIG. 7 or FIG. 8, referring to FIG. 10, FIG. 10 is still another schematic structural diagram of an in-vehicle communication system according to the present disclosure. As shown in (a) of FIG. 10, the in-vehicle communication system 100 may further include an optical splitter 50. An end of the optical splitter 50 is connected to the first optical device 10. The optical splitter 50 is further connected to the N second optical devices respectively.

Further, as shown in (a) of FIG. 10, the first optical device 10 further includes a third light source 107 and a second optical modulator 103. The third light source 107 is connected to the third signal processing module 101 and the second optical modulator 103 respectively. The second optical modulator 103 is further connected to an end of the optical splitter 50 and the third signal processing module 101.

Further, as shown in (b) of FIG. 10, the second optical device i further includes a second photodetector 305. The second photodetector 305 is connected to the second signal processing module 304 and the optical splitter 50 respectively.

In actual implementation, when it is determined that an optical signal is emitted (which may also be understood as that the current transmission mode is determined as signal downlink transmission), the third signal processing module 101 is further configured to control the third light source 107 to generate a fourth optical carrier. The third light source 107 is further configured to transmit the generated fourth optical carrier to the second optical modulator 103. The third signal processing module 101 may be further configured to generate a second baseband signal and transmit the second baseband signal to the second optical modulator 103. A wavelength of the fourth optical carrier is a second operating wavelength shared by the N second optical devices. Alternatively, the wavelength of the fourth optical carrier is a second operating wavelength supported by each second optical device in the N second optical devices. The second optical modulator 103 is configured to perform modulation on the fourth optical carrier based on the second baseband signal, to obtain a second optical signal, and transmit the second optical signal to the optical splitter 50.

The optical splitter 50 is configured to split the second optical signal to obtain N third optical signals, and transmit the N third optical signals respectively to the N second optical devices. It should be understood that, the N third optical signals may include a third optical signal 1, a second optical signal 2, a third optical signal i, ..., and a third optical signal N. The optical splitter 50 transmits each third optical signal in the N third optical signals to an only second optical device. For example, the optical splitter 50 transmits the third optical signal 1 in the N third optical signals to the second optical device 1, transmits the third optical signal 2 in the N third optical signals to the second optical device 2, and transmits the third optical signal i in the N third optical signals to the second optical device i. Optionally, optical power of the N third optical signals may be same.

The second photodetector 305 is configured to convert the third optical signal i from the optical splitter 50 into a corresponding second electrical signal, and transmit the second electrical signal to the second signal processing module 304. Correspondingly, the second signal processing module 304 may perform further processing, for example, filtering and amplification, on the second electrical signal.

In the foregoing implementation, signal uplink transmission is implemented by using the optical channel 20, and splitting of a downlink optical signal is implemented by using the optical splitter 50. In this way, the in-vehicle communication system 100 can support synchronous uplink and downlink transmission of signals, thereby improving signal transmission efficiency and applicability of the in-vehicle communication system 100.

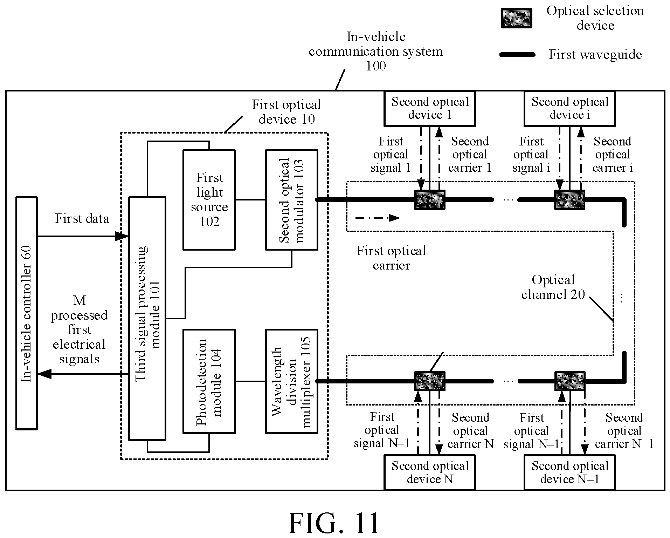

In some feasible implementations, referring to FIG. 11, FIG. 11 is still another schematic structural diagram of an in-vehicle communication system according to the present disclosure. Based on any one of the structures shown in FIG. 6 to FIG. 10, as shown in FIG. 11, the in-vehicle communication system 100 may further include an in-vehicle controller 60. The in-vehicle controller 60 is connected to the third signal processing module 101 in the first optical device. It should be understood that, FIG. 11 is shown by using the structure shown in FIG. 6 as an example, and other structures shown in FIG. 7 to FIG. 10 are similar. Details are not described herein again.

In actual operation, after receiving the M first electrical signals from the photodetection module 104, the third signal processing module 101 may be further configured to perform filtering and amplification on the M first electrical signals, to obtain M processed first electrical signals, and transmit the M processed first electrical signals to the in-vehicle controller 60, so that the in-vehicle controller 60 can obtain corresponding uplink data based on the M processed first electrical signals.

Optionally, the in-vehicle controller 60 may be further configured to transmit first data (which may be understood as to-be-transmitted downlink data) to the third signal processing module 101. The third signal processing module 101 may be configured to generate the second baseband signal based on the first data.

It should be noted that, the in-vehicle controller 60 provided in the present disclosure may be any form of device or apparatus that can control the vehicle, for example, an IVC300 controller.

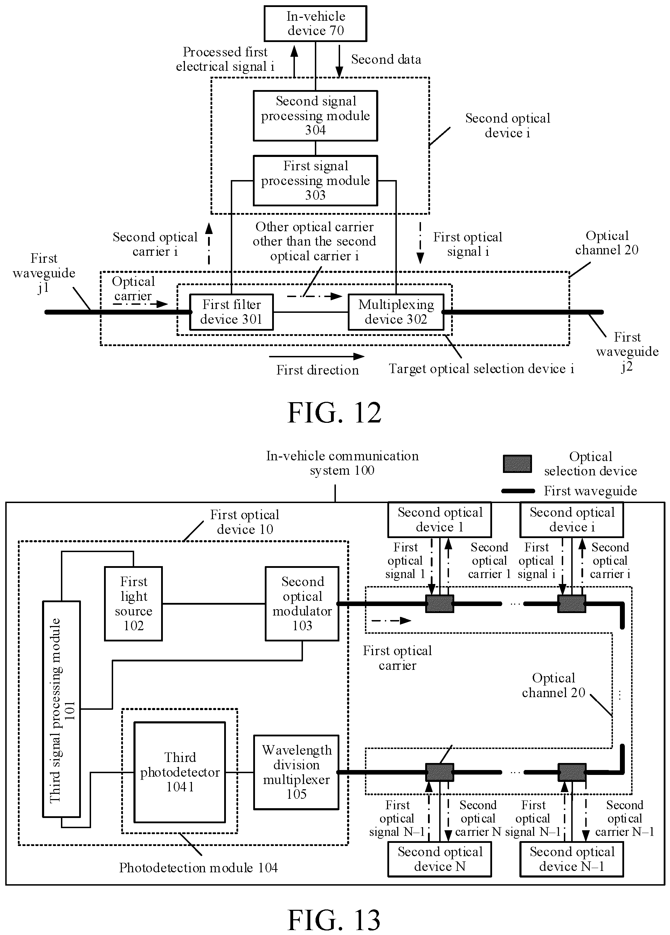

In some feasible implementations, referring to FIG. 12, FIG. 12 is still another schematic structural diagram of an in-vehicle communication system according to the present disclosure. Based on any one of the structures shown in FIG. 4 to FIG. 11, as shown in FIG. 12, the in-vehicle communication system 100 may further include an in-vehicle device 70. The in-vehicle device 70 is connected to the second signal processing module 304. It should be understood that, FIG. 12 is shown by using the structure shown in FIG. 2 as an example, and other structures shown in FIG. 5 to FIG. 11 are similar. Details are not described herein again.

In actual operation, the in-vehicle device 70 may be configured to transmit second data (which may be understood as to-be-transmitted uplink data) to the second signal processing module 304. The second signal processing module 304 may be configured to generate the first baseband signal based on the second data.

Optionally, the second signal processing module 304 may be further configured to perform filtering and amplification on a received first electrical signal i, to obtain a processed first electrical signal i, and transmit the processed first electrical signal i to the in-vehicle device 70, so that the in-vehicle device 70 can obtain corresponding downlink data based on the processed first electrical signal i.

It should be noted that, in the embodiments of the present disclosure, the in-vehicle device 70 may be any form of electronic device that can perform communication, for example, a camera, a display, a lidar, a stereo, an in-vehicle navigator, a driving recorder, or a smart sensor. An implementation form of the in-vehicle device 70 is not specifically limited in the embodiments of the present disclosure.

It should also be noted that, in FIG. 12, a case in which the in-vehicle communication system 100 includes one in-vehicle device 70 and the in-vehicle device 70 is connected to the second optical device is exemplarily described. In actual implementation, the in-vehicle communication system 100 may further include one or more in-vehicle devices other than the in-vehicle device 70. The one or more in-vehicle devices may be connected to one or more second optical devices other than the second optical device i. In addition, implementation of functions between the one or more in-vehicle devices and the one or more second optical devices is similar to implementation of functions between the in-vehicle device 70 and the second optical device i described above. To avoid encumbrance, details are not described herein again.

In some feasible implementations, referring to FIG. 13, FIG. 13 is still another schematic structural diagram of an in-vehicle communication system according to the present disclosure. Based on any one of the structures shown in FIG. 6 to FIG. 11, as shown in FIG. 13, the photodetection module 104 includes a third photodetector 1041. The third photodetector 1041 is connected to the third signal processing module 101 and the wavelength division multiplexer 105 respectively. It should be understood that, FIG. 13 is shown by using the structure shown in FIG. 6 as an example, and other structures shown in FIG. 7 to FIG. 11 are similar. Details are not described herein again.

In actual operation, the wavelength division multiplexer 105 is configured to transmit the M first optical signals respectively to the third photodetector 1041 at different moments. The third photodetector 1041 is configured to convert each received first optical signal into a corresponding second electrical signal, and transmit each second electrical signal obtained through conversion to the third signal processing module 101, so that M second electrical signals are transmitted to the third signal processing module 101 in a time-sharing manner.

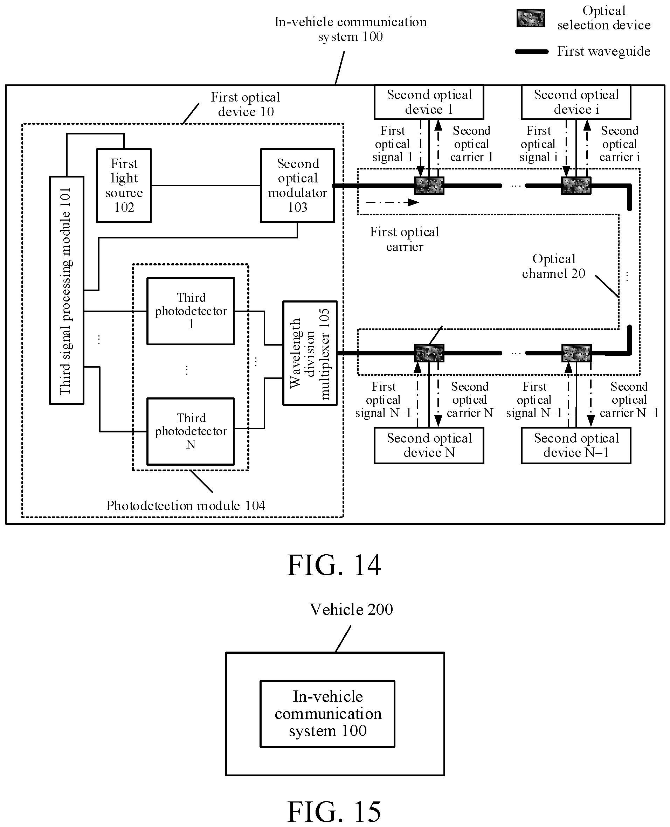

In some feasible implementations, referring to FIG. 14, FIG. 14 is still another schematic structural diagram of an in-vehicle communication system according to the present disclosure. Based on any one of the structures shown in FIG. 6 to FIG. 11, as shown in FIG. 14, the photodetection module 104 includes N third photodetectors. The N third photodetectors may include a third photodetector 1 to a third photodetector N. The N third photodetectors are respectively connected to the third signal processing module 101 and the wavelength division multiplexer 105. It should be understood that, FIG. 14 is shown by using the structure shown in FIG. 6 as an example, and other structures shown in FIG. 7 to FIG. 11 are similar. Details are not described herein again.

In actual operation, the wavelength division multiplexer 105 is configured to transmit the M first optical signals respectively to M third photodetectors in the N third photodetectors. It should be understood that, one third photodetector in the M third photodetectors receives one only first optical signal. In addition, the N third photodetectors may respectively correspond to the N first operating wavelengths.

Any third photodetector in the M third photodetectors is configured to convert a received first optical signal into a second electrical signal, and transmit the second electrical signal obtained through conversion to the third signal processing module 101. Alternatively, the M third photodetectors are configured to convert the M first optical signals into M second electrical signals, and transmit the M second electrical signals to the third signal processing module 101.

It should be understood that, FIG. 13 and FIG. 14 only exemplarily describe specific implementations of the photodetection module 104 provided in the present disclosure. In actual implementation, the photodetection module 104 may alternatively use other possible implementations as long as it can be ensured that the photodetection module 104 implements the corresponding functions described above. This is not limited in the present disclosure.

It should also be noted that, the light source (for example, the first light source 102, the second light source 106, or the third light source 107 described above) provided in the embodiments of the present disclosure may be a laser or another light source device in any form. An implementation of the light source is not specifically limited in the present disclosure.

An embodiment of the present disclosure further provides a vehicle. Referring to FIG. 15, FIG. 15 is a schematic structural diagram of a vehicle according to an embodiment of the present disclosure. As shown in FIG. 15, a vehicle 200 may include the in-vehicle communication system 100 described in the foregoing embodiments. The vehicle 200 may implement internal communication through the in-vehicle communication system 100.

It should be understood that, in actual implementation, the vehicle 200 may further include a number of wheels, seats, an in-vehicle power supply, an electric device, the in-vehicle controller 60 and the in-vehicle device 70 described above, and the like.

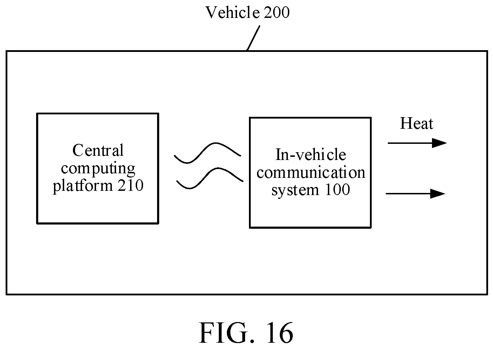

Optionally, referring to FIG. 16, FIG. 16 is still another schematic structural diagram of a vehicle according to an embodiment of the present disclosure. As shown in FIG. 16, the vehicle 200 may further include a central computing platform 210. The first optical device 10 in the in-vehicle communication system 100 may be arranged around the central computing platform 210. In this way, a temperature of the light source (for example, the first light source 102, the second light source 106, or the third light source 107 described above) in the first optical device 10 may be reduced by using a semiconductor refrigerator TEC or a water cooling system of the central computing platform 210, thereby avoiding impact of a high temperature of an in-vehicle environment on performance of the light source in the first optical device 10.

In the embodiments of the present disclosure, some devices or functional modules in the in-vehicle communication system 100 may be optically connected through a waveguide. Optionally, the waveguide may be an optical fiber. For example, the optical fiber may be a special-purpose photoelectric composite cable, which may provide both a communication function and a power supply function in the in-vehicle communication system 100. The optical fiber may be a single-mode optical fiber, a multi-mode optical fiber, a plastic optical fiber, or the like. An implementation form of the waveguide is not specifically limited in the embodiments of the present disclosure.

In the embodiments of the present disclosure, some devices or functional modules in the in-vehicle communication system 100 may be electrically connected through a line. Optionally, the line may be a circuit integrated on a circuit board, or may be a communication cable. An implementation form of the line is not specifically limited in the embodiments of the present disclosure.

In this specification, claims, and drawings of the present disclosure, the terms "first", "second", or the like are intended to distinguish between different objects but do not indicate a particular order. In addition, the terms "include", "have", and any variant thereof are intended to cover a non-exclusive inclusion. For example, a process, method, system, product, or device that includes a series of steps is not limited to the listed steps or units; and instead, further optionally includes a step that is not listed, or further optionally includes another step that is intrinsic to the process, method, product, or device.

"Embodiment" mentioned in this specification means that particular features, structures, or characteristics described with reference to the embodiment may be included in at least one embodiment of the present disclosure. The term appearing at different locations of this specification may not refer to the same embodiment or an independent or alternative embodiment that is mutually exclusive with another embodiment. A person skilled in the art explicitly or implicitly understands that the embodiments described in this specification may be combined with other embodiments.

Although the present disclosure is described with reference to embodiments, in a process of implementing the present disclosure that claims protection, a person skilled in the art may understand and implement another variation of the disclosed embodiments by viewing the drawings, disclosed content, and the claims. In the claims, "comprising" (comprising) does not exclude another component or another step, and "a" or "one" does not exclude a case of multiple. Some measures are recorded in dependent claims that are different from each other, but this does not mean that these measures cannot be combined to produce a better effect.

The embodiments of the present disclosure are described in detail above. The principles and implementations of the in-vehicle communication system and the vehicle provided in the present disclosure are described herein by using specific examples. The descriptions of the above embodiments are merely used for helping understand the method and core ideas of the present disclosure. In addition, a person of ordinary skill in the art may make modifications to the specific implementations and application scopes according to the in-vehicle communication system and the vehicle provided in the present disclosure. In conclusion, the content of this specification should not be construed as a limitation to the present disclosure.

The objectives, technical solutions, and benefits of the present disclosure are further described in detail in the foregoing specific embodiments. It should be understood that the foregoing descriptions are merely specific embodiments of the present disclosure, but are not intended to limit the protection scope of the present disclosure. Any modification, equivalent replacement or improvement made based on the technical solutions in the present disclosure shall fall within the protection scope of the present disclosure.

## Claims

1. An in-vehicle communication system, comprising a first optical device, N second optical devices, and an optical channel, the optical channel having two ends, one being connected to the first optical device, and the other to the N second optical devices being respectively connected to the optical channel, the N second optical devices corresponding to N different first operating wavelengths, and N being a positive integer greater than or equal to 1;
the first optical device being configured to transmit a first optical carrier to the optical channel, wherein the first optical carrier comprises N second optical carriers whose wavelengths are respectively the N first operating wavelengths; and
a second optical device i in the N second optical devices being configured to receive a second optical carrier i in the first optical carrier from the optical channel, and transmit a first optical signal i obtained through modulation based on the second optical carrier i back to the optical channel, wherein a wavelength of the second optical carrier i is a first operating wavelength i corresponding to the second optical device i, and transmission directions of the first optical signal i and the first optical carrier in the optical channel are same.

2. The in-vehicle communication system according to claim 1, wherein the first optical device is further configured to receive, from the optical channel, M first optical signals from M second optical devices in the N second optical devices, wherein M is a positive integer less than or equal to N.

3. The in-vehicle communication system according to claim 1 or 2, wherein the optical channel comprises N optical selection devices, and the N second optical devices are respectively connected to the N optical selection devices;
an optical selection device i connected to the second optical device i in the N optical selection devices is configured to transmit the second optical carrier i in the received first optical carrier to the second optical device i, and transmit an other optical carrier other than the second optical carrier i in the received first optical carrier back to the optical channel; and
the optical selection device i is further configured to transmit the first optical signal i from the second optical device i back to the optical channel,
preferably wherein the optical selection device i comprises a first filter device and a multiplexing device, and the first filter device is connected to the multiplexing device;
the first filter device is configured to transmit the second optical carrier i in the first optical carrier received from the optical channel to the second optical device i, and transmit the other optical carrier other than the second optical carrier i in the received first optical carrier to the multiplexing device;
the multiplexing device is configured to transmit the other optical carrier back to the optical channel; and
the multiplexing device is further configured to transmit the first optical signal i emitted by the second optical device i back to the optical channel.

4. The in-vehicle communication system according to claim 2, wherein the optical channel further comprises a plurality of first waveguides, the N optical selection devices are connected in series through the plurality of first waveguides to form the optical channel, and two ends of the N optical selection devices connected in series are connected to the first optical device through or as the two ends of the optical channel; and
the first filter device is further connected to an end of a first waveguide j1 in the plurality of first waveguides and the second optical device i, and the multiplexing device is further connected to an end of a first waveguide j2 in the plurality of first waveguides and the second optical device i.

5. The in-vehicle communication system according to any one of claims 3 to 4, wherein the second optical device i comprises a first signal processing module and a second signal processing module, and the first signal processing module is connected to the second signal processing module, the first filter device, and the multiplexing device respectively;
the second signal processing module is configured to generate a first baseband signal, and transmit the first baseband signal to the first signal processing module; and
the first signal processing module is configured to perform modulation on the second optical carrier i from the first filter device based on the first baseband signal, to obtain the first optical signal i, and transmit the first optical signal i to the multiplexing device,
preferably wherein the first signal processing module comprises an optical switch, a first photodetector, and a first optical modulator, the optical switch is connected to the first filter device, the first photodetector, and the first optical modulator respectively, and the first optical modulator is further connected to the second signal processing module and the multiplexing device;
the optical switch is configured to establish an optical path between the first filter device and the first optical modulator and disconnect an optical path between the first filter device and the first photodetector, to transmit the second optical carrier i to the first optical modulator; and
the first optical modulator is configured to perform modulation on the second optical carrier i based on the first baseband signal, to obtain the first optical signal i, and transmit the first optical signal i to the multiplexing device,
more preferably wherein the second signal processing module is further configured to control, if it is determined that the first optical device is configured to output the first optical carrier, the optical switch to establish the optical path between the first filter device and the first optical modulator and disconnect the optical path between the first filter device and the first photodetector.

6. The in-vehicle communication system according to claim 5, wherein the first optical device comprises a third signal processing module, a first light source, a second optical modulator, a photodetection module, and a wavelength division multiplexer; and
the third signal processing module is connected to the first light source, the second optical modulator, and the photodetection module respectively, the first light source is connected to a first optical selection device in the N optical selection devices through the second optical modulator, and the photodetection module is connected to a second optical selection device in the N optical selection devices through the wavelength division multiplexer, wherein the first optical selection device and the second optical selection device are located at the two ends of the N optical selection devices connected in series,
preferably wherein the third signal processing module is configured to control the first light source to generate the first optical carrier, and control the second optical modulator not to perform modulation on the first optical carrier;
the first light source is configured to transmit the first optical carrier to the first optical selection device through the second optical modulator;
the wavelength division multiplexer is configured to decompose an optical signal from the second optical selection device into the M first optical signals, and transmit the M first optical signals respectively to the photodetection module; and
the photodetection module is configured to convert the M first optical signals into M first electrical signals, and transmit the M first electrical signals to the third signal processing module.

7. The in-vehicle communication system according to claim 6, wherein the third signal processing module is further configured to control the first light source to generate a third optical carrier, and transmit a second baseband signal to the second optical modulator, wherein a wavelength of the third optical carrier comprises the N different first operating wavelengths; and
the second optical modulator is configured to perform modulation on the third optical carrier based on the second baseband signal, to obtain a second optical signal, and transmit the second optical signal to the first optical selection device, to transmit the second optical signal to the optical channel,
preferably wherein the optical switch is configured to disconnect the optical path between the first filter device and the first optical modulator, and establish the optical path between the first filter device and the first photodetector;
the first filter device is configured to transmit, through the optical switch, a third optical signal in the second optical signal transmitted in the first waveguide j1 to the first photodetector, and transmit an other optical signal other than the third optical signal in the second optical signal transmitted in the first waveguide j1 back to the optical channel, wherein a wavelength of the third optical signal is same as the first operating wavelength i; and
the first photodetector is configured to convert the third optical signal into a second electrical signal, and transmit the second electrical signal to the second signal processing module,
more preferably wherein the second signal processing module is further configured to control, if it is determined that the first optical device is configured to output the second optical signal, the optical switch to disconnect the optical path between the first filter device and the first optical modulator and establish the optical path between the first filter device and the first photodetector.

8. The in-vehicle communication system according to any one of claims 5 to 7, wherein the first optical device outputs the first optical carrier and the second optical signal at different moments.

9. The in-vehicle communication system according to claim 5, wherein the first signal processing module comprises a first optical modulator, and the first optical modulator is connected to the first filter device, the multiplexing device, and the second signal processing module respectively; and
the first optical modulator is configured to perform modulation on the second optical carrier i based on the first baseband signal, to obtain the first optical signal i, and transmit the first optical signal i to the multiplexing device,
preferably wherein the second signal processing module is further configured to generate the first baseband signal and provide the first baseband signal to the first optical modulator if it is determined that the first optical device is configured to output the first optical carrier.

10. The in-vehicle communication system according to claim 9, wherein the first optical device comprises a third signal processing module, a first light source, a photodetection module, and a wavelength division multiplexer; and
the third signal processing module is connected to the first light source and the photodetection module respectively, the first light source is connected to a first optical selection device in the N optical selection devices through the second optical modulator, and the photodetection module is connected to a second optical selection device in the N optical selection devices through the wavelength division multiplexer,
preferably wherein the third signal processing module is configured to control the first light source to generate the first optical carrier;
the first light source is configured to transmit the first optical carrier to the first optical selection device;
the wavelength division multiplexer is configured to decompose, according to wavelengths, an optical signal from the second optical selection device into the M first optical signals, and transmit the M first optical signals respectively to the photodetection module; and
the photodetection module is configured to convert the M first optical signals into M first electrical signals, and transmit the M first electrical signals to the third signal processing module.

11. The in-vehicle communication system according to claim 10, wherein the in-vehicle communication system further comprises N second filter devices, the N second filter devices are connected in series through a plurality of second waveguides, to form a filter channel, an end of the filter channel is connected to the first optical device, and the N second filter devices are respectively connected to the N second optical devices,
preferably wherein the first optical device further comprises a second light source and a second optical modulator, the second light source is connected to the third signal processing module and the second optical modulator respectively, and the second optical modulator is further connected to an end of the filter channel and the third signal processing module; and
the second optical device i further comprises a second photodetector, and the second photodetector is connected to the second signal processing module and a target second filter device in the N second filter devices,
more preferably wherein the third signal processing module is further configured to control the second light source to generate a third optical carrier, and transmit a second baseband signal to the second optical modulator, wherein a wavelength of the third optical carrier comprises the N different first operating wavelengths;
the second optical modulator is configured to perform modulation on the third optical carrier based on the second baseband signal, to obtain a second optical signal, and transmit the second optical signal to the filter channel;
the target second filter device is configured to transmit a third optical signal comprised in the second optical signal transmitted in the filter channel to the second photodetector, and transmit an other optical signal other than the third optical signal in the transmitted second optical signal back to the filter channel, wherein a wavelength of the third optical signal is same as the first operating wavelength i; and
the second photodetector is configured to convert the third optical signal into a second electrical signal, and transmit the second electrical signal to the second signal processing module;
or wherein the in-vehicle communication system further comprises an optical splitter, and the optical splitter is connected to the first optical device and the N second optical devices respectively,
preferably wherein the first optical device further comprises a third light source and a second optical modulator, the third light source is connected to the third signal processing module and the second optical modulator respectively, and the second optical modulator is further connected to the optical splitter and the third signal processing module; and
the second optical device i further comprises a second photodetector, and the second photodetector is connected to the second signal processing module and the optical splitter,
more preferably wherein the third signal processing module is further configured to control the third light source to generate a fourth optical carrier, and transmit a second baseband signal to the second optical modulator, wherein a wavelength of the fourth optical carrier is a second operating wavelength shared by the N second optical devices;
the second optical modulator is configured to perform modulation on the fourth optical carrier based on the second baseband signal, to obtain a second optical signal, and transmit the second optical signal to the optical splitter;
the optical splitter is configured to split the second optical signal to obtain N third optical signals, and transmit the N third optical signals respectively to the N second optical devices; and
the second photodetector is configured to convert a received third optical signal into a second electrical signal, and transmit the second electrical signal to the second signal processing module.

12. The in-vehicle communication system according to claim 7, or claim 11, wherein the in-vehicle communication system further comprises an in-vehicle controller, and the in-vehicle controller is connected to the third signal processing module; and
the third signal processing module is further configured to perform filtering and amplification on the M first electrical signals, to obtain M processed first electrical signals, and transmit the M processed first electrical signals to the in-vehicle controller;
and/or
the in-vehicle controller is further configured to transmit first data to the third signal processing module, and the third signal processing module is configured to generate the second baseband signal based on the first data;
or wherein the in-vehicle communication system further comprises an in-vehicle device, and the in-vehicle device is connected to the second signal processing module; and
the in-vehicle device is further configured to transmit second data to the second signal processing module, and the second signal processing module is configured to generate the first baseband signal based on the second data;
and/or
the second signal processing module is configured to perform filtering and amplification on a first electrical signal, to obtain a processed first electrical signal, and transmit the processed first electrical signal to the in-vehicle device.

13. The in-vehicle communication system according to claim 6 or 10, wherein the photodetection module comprises a third photodetector, and the third photodetector is connected to the third signal processing module and the wavelength division multiplexer respectively;
the wavelength division multiplexer is configured to transmit the M first optical signals respectively to the third photodetector at different moments; and
the third photodetector is configured to convert each received first optical signal into a second electrical signal, and transmit each second electrical signal obtained through conversion to the third signal processing module;
or wherein the photodetection module comprises N third photodetectors, and the N third photodetectors are respectively connected to the third signal processing module and the wavelength division multiplexer;
the wavelength division multiplexer is configured to transmit the M first optical signals respectively to M third photodetectors in the N third photodetectors; and
any third photodetector in the M third photodetectors is configured to convert a received first optical signal into a second electrical signal, and transmit the second electrical signal obtained through conversion to the third signal processing module.

14. The in-vehicle communication system according to any one of claims 1 to 13, wherein the optical channel is a closed ring network channel.

15. A vehicle, comprising the in-vehicle communication system according to any one of claims 1 to 14, preferably wherein the first optical device in the in-vehicle communication system is arranged around a central computing platform of the vehicle.
